# EUROPÄISCHE PATENTANMELDUNG

(11) **EP 4 494 796 A1**
(43) Veröffentlichungstag der Anmeldung: **22.01.2025**
(21) Anmeldenummer: 23185888.7
(22) Anmeldetag: 17.07.2023
(51) Int. Cl.: B23K 9/073, B23K 9/095, B23K 9/12, B23K 9/173, B23K 9/067

(54) **SCHWEISSVORRICHTUNG MIT DRAHTSPIEL-ERKENNUNG SOWIE VERFAHREN ZUM BESTIMMEN EINES DRAHTSPIEL-WERTS**

(71) Anmelder: Fronius International GmbH, 4643 Pettenbach (AT)
(72) Erfinder: Söllinger, Dominik, 4643 Pettenbach (AT); Waldhör, Andreas, 4643 Pettenbach (AT)
(74) Vertreter: Bratovic, Nino Maria

(57) **Zusammenfassung**

Die Erfindung schafft eine Schweißvorrichtung (100) sowie ein Verfahren zum Bestimmen eines Drahtspiel-Werts einer Schweißvorrichtung (100), welche einen Schweißbrenner (140) und eine Fördereinrichtung (110) mit einem Vorwärtsbetrieb (V) zum Fördern einer Drahtelektrode (1) der Schweißvorrichtung (100) in Vorwärtsrichtung und mit einem Rückwärtsbetrieb (R) zum Fördern der Drahtelektrode (1) in Rückwärtsrichtung aufweist. Das Verfahren umfasst zumindest die folgenden automatisierten Schritte:
- Fördern (S20) der Drahtelektrode (1) in dem Vorwärtsbetrieb (V), bis ein Kurzschluss zwischen der Drahtelektrode (1) und einem Werkstück festgestellt wird;
- daraufhin Fördern (S30) der Drahtelektrode (1) in dem Rückwärtsbetrieb (R);
- daraufhin Starten (S40) einer Messung der Drahtvorschublänge;
- Beenden (S50) der Messung der Drahtvorschublänge, sobald ein Aufbruch des Kurzschlusses festgestellt wird; und
- Ausgeben (S60) eines Drahtspiel-Werts (D1) basierend auf der gemessenen Drahtvorschublänge.

## Beschreibung

### Technisches Gebiet

Die vorliegende Erfindung betrifft eine Schweißvorrichtung mit Drahtspiel-Erkennung sowie ein Verfahren zum Bestimmen eines Drahtspiel-Werts. Die Erfindung stellt außerdem ein Verfahren zum Betreiben einer Schweißvorrichtung, sowie ein zugehöriges Computerprogrammprodukt und Datenspeichermedium bereit.

### Hintergrund der Erfindung

Schweißvorrichtungen sind aus mehreren Komponenten zusammengesetzt, die üblicherweise ausgetauscht werden können, etwa um verschiedene Schweißaufgaben durchzuführen.

Beispielsweise werden für verschiedene Drahtelektrodendurchmesser verschiedene Drahtseelen verwendet, oder ganze Schlauchpakete werden in Abhängigkeit von ihrer Länge ausgetauscht.

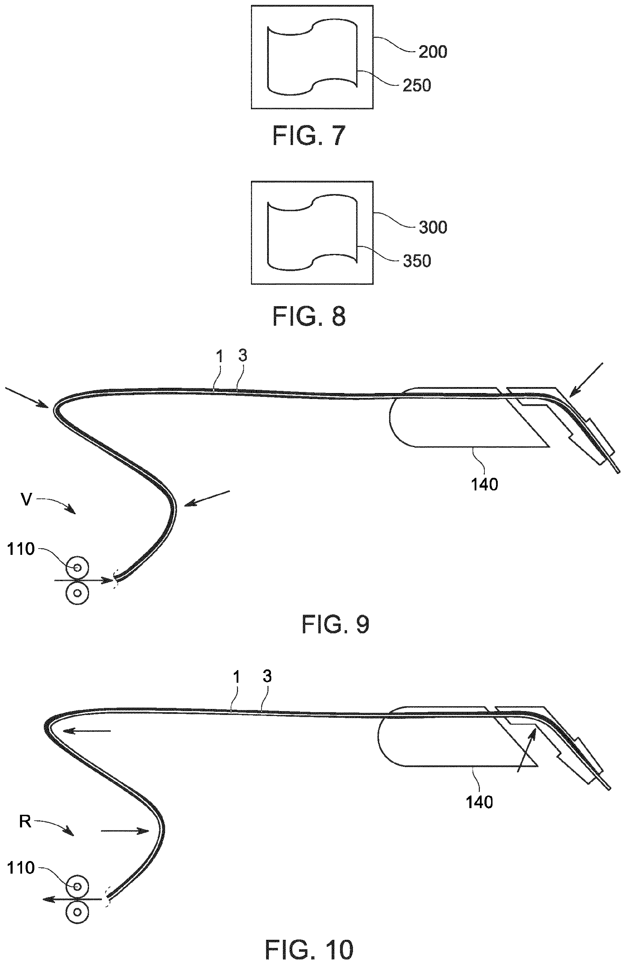

In jeder Schweißvorrichtung hat die Drahtelektrode (oder: der Schweißdraht), wie in den Fig. 9 und Fig. 10 erläutert wird, zwischen einer Fördereinrichtung 110 zum Fördern der Drahtelektrode und dem Kontaktrohr am Ende des Schweißbrenners 140 ein gewisses Drahtspiel. Fig. 9 zeigt schematisch das Drahtspiel einer Drahtelektrode 1 innerhalb einer Drahtseele 3 bei einem Vorwärtsbetrieb V der Fördereinrichtung 110. Fig. 10 zeigt das Drahtspiel im Rückwärtsbetrieb R der Fördereinrichtung 110. Die Pfeile zeigen jeweils Krümmungen innerhalb der Drahtseele oder des Schweißbrenners 140 an, welche zu dem Drahtspiel der Drahtelektrode beitragen können. Dabei liegt die Drahtelektrode 1 im Vorwärtsbetrieb V tendenziell mit substanziellem Drahtspiel an den Außenradii von Krümmungen an (siehe Pfeile zu den Krümmungen in Fig. 9), während sie im Rückwärtsbetrieb R tendenziell an den Innenradii von Krümmungen (siehe Pfeile zu den Krümmungen in Fig. 10) anliegt, nachdem das Drahtspiel abgebaut wurde.

Der genau Wert des jeweils vorliegenden Drahtspiels, oder anders ausdrückt, die Drahtvorschublänge, um welche eine Drahtelektrode durch die Fördereinrichtung gefördert werden muss, bevor sich am Drahtelektrodenende tatsächlich eine Änderung aus dem Stillstand heraus ergibt, kann viele Vorgänge an der Schweißvorrichtung beeinflussen. Insbesondere gibt es Schweißverfahren, welche umso besser funktionieren, je genauer die Position des Drahtelektrodenendes zu allen Zeiten bekannt ist. Die Unkenntnis über den jeweils aktuell vorliegenden Drahtspiel-Wert erschwert das präzise Durchführen solcher Schweißverfahren.

### Zusammenfassung der Erfindung

Es ist somit eine Aufgabe der vorliegenden Erfindung, eine Schweißvorrichtung mit Drahtspiel-Erkennung, ein Verfahren zum Bestimmen eines Drahtspiel-Werts sowie ein Verfahren zum Betreiben einer Schweißvorrichtung bereitzustellen, welche die o.g. Schwierigkeiten überwinden.

Dementsprechend wird, gemäß einem ersten Aspekt der vorliegenden Erfindung, eine Schweißvorrichtung bereitgestellt mit:
einer Fördereinrichtung mit einem Vorwärtsbetrieb zum Fördern einer abschmelzenden Drahtelektrode der Schweißvorrichtung in Vorwärtsrichtung und mit einem Rückwärtsbetrieb zum Fördern der Drahtelektrode in Rückwärtsrichtung;
einem Schweißbrenner mit einem Kontaktrohr, welches elektrisch mit einem definierten elektrischen Potenzial verbunden oder verbindbar ist und mittels welchem ein elektrischer Kontakt zu der Drahtelektrode herstellbar ist;
eine elektrische-Parameter-Messeinrichtung, welche zum Messen eines elektrischen Parameters zwischen der Drahtelektrode und einem Werkstück eingerichtet ist;
einer Steuereinrichtung, welche zum Durchführen eines Drahtspiel-Messverfahrens dazu eingerichtet ist:
   - die Fördereinrichtung zu steuern, die Drahtelektrode in dem Vorwärtsbetrieb zu fördern, bis mittels der elektrische-Parameter-Messeinrichtung ein Kurzschluss zwischen der Drahtelektrode und dem Werkstück festgestellt wird;
   - daraufhin (insbesondere unverzüglich) die Fördereinrichtung zu steuern, die Drahtelektrode in dem Rückwärtsbetrieb zu fördern;
   - daraufhin (insbesondere bei Eintritt eines vorbestimmten Ereignisses) eine Messung der Drahtvorschublänge zu starten, und diese zu beenden, sobald durch die elektrische-Parameter-Messeinrichtung ein Aufbruch des Kurzschlusses festgestellt wird; und
   - basierend auf der gemessenen Drahtvorschublänge einen Drahtspiel-Wert auszugeben.

Wenn hier von "Einrichtungen" die Rede ist, versteht es sich, dass dies nicht notwendigerweise bedeutet, dass solche Einrichtungen als separate Einrichtungen getrennt voneinander ausgebildet sein müssen. Es können verschiedene Funktionalitäten als verschiedene Einrichtungen bezeichnet werden, obwohl diese möglicherweise durch ein und dieselbe Hardware realisiert sein können. Ebenso können Überlappungen zwischen verschiedenen Einrichtungen vorliegen, wobei eine oder mehrere Einrichtungen auch ganz oder teilweise als Software, die durch eine Recheneinrichtung ausgeführt wird, realisiert sein können.

Unter einer Drahtvorschubgeschwindigkeit wird vorliegend eine Geschwindigkeit verstanden, mit welcher sich eine Drahtelektrode der Schweißvorrichtung bewegt, ungeachtet dessen, ob sie sich vorwärts oder rückwärts bewegt.

Unter einer Drahtvorschublänge soll eine Länge verstanden werden, um die die Fördereinrichtung einen an ihr anliegenden Teil der Drahtelektrode bewegt hat. Aufgrund des immer vorliegenden und teilweise unbekannten Drahtspiels, wie im Vorangehenden erläutert wurde, entspricht die Drahtvorschublänge nicht (immer) einer Bewegung des Drahtelektrodenendes.

In der vorliegenden Beschreibung werden verschiedene hochgenaue Messverfahren beschrieben, die auf physikalischen Messvorgängen von Zeiten und Geschwindigkeiten, sowie auf dem Steuern von Aktoren (z.B. der Fördereinrichtung) basieren. Es versteht sich, dass dabei Signallaufzeiten und Reaktionszeiten auf Signale, Messungenauigkeiten, Trägheiten, und dergleichen auftreten. Sofern diese nicht explizit besprochen werden, versteht es sich ebenfalls, dass der Fachmann, wenn er eine erhöhte Genauigkeit an irgendeiner Stelle bewirken möchte, entsprechende Korrekturen vorsehen kann. Ebenso versteht es sich, dass, wenn hierin davon gesprochen wird, dass etwas "sofort" oder "unmittelbar darauf" oder dergleichen durchgeführt wird, die oben genannten Effekte und ähnliche berücksichtigt sein sollen.

Gemäß einigen Ausführungsformen, Varianten, oder Verfeinerungen von Ausführungsformen ist wird die Messung der Drahtvorschublänge (genau) dann gestartet, wenn die Drahtfördergeschwindigkeit einen Nulldurchgang vom Positiven ins Negative durchführt. Auf diese Weise entspricht die dann gemessene Drahtvorschublänge besonders genau dem zu messenden Drahtspiel-Wert.

Alternativ kann die Messung der Drahtvorschublänge auch beispielsweise auch bereits vorher erfolgen, etwa unverzüglich sobald die Fördereinrichtung gesteuert (oder: angesteuert) wurde, die Drahtelektrode in dem Rückwärtsbetrieb zu fördern, das heißt mit Beginn der Verzögerung der dann noch positiven Drahtfördergeschwindigkeit. Der ausgegebene Drahtspiel-Wert kann um den dadurch entstehenden Fehler bereinigt werden, da die Steuereinrichtung sowohl Kenntnis von der Drahtfördergeschwindigkeit zum Zeitpunkt der Ansteuerung zum Zeitpunkt des erfassten Kurzschlusses hat, als auch Informationen über die ausgeübte oder ausübbare Verzögerung durch die Fördereinrichtung umfassen kann. Mit diesen Informationen kann die zusätzliche Drahtvorschublänge errechnet werden, die durch die Trägheit der Fördereinrichtung nach Eintritt des Kurzschlusses noch bewirkt wird, und die somit vom gemessenen Drahtspiel-Wert noch abgezogen werden kann. Entsprechend kann auch bei anderen Zeitpunkten des Startens der Messung sowie des Beendens der Messung vorgegangen werden.

Gemäß einigen Ausführungsformen, Varianten, oder Verfeinerungen von Ausführungsformen ist die Steuereinrichtung außerdem dazu eingerichtet, einen Schweißprozess unter Verwendung des ausgegebenen Drahtspiel-Werts durchzuführen.

Beispielsweise kann die Steuereinrichtung dazu eingerichtet sein, einen Zeitpunkt, an welchem ein Schweißstrom erhöht wird, unter Verwendung des ausgegebenen Drahtspiel-Werts zu berechnen und einen entsprechenden Steuerbefehl auszugeben, das heißt, einen Steuerbefehl auszugeben, welcher bewirkt oder anweist, dass der Schweißstrom an dem berechneten Zeitpunkt erhöht wird.

Insbesondere kann die Steuereinrichtung dazu eingerichtet sein, einen Zeitpunkt, an welchem der Schweißstrom während eines Förderns der Drahtelektrode im Rückwärtsbetrieb der Fördereinrichtung nach einem Kurzschluss erhöht wird (z.B. zur Wiederzündung eines Lichtbogens), unter Verwendung des ausgegebenen Drahtspiel-Werts zu berechnen und einen entsprechenden Steuerbefehl auszugeben, das heißt, einen Steuerbefehl auszugeben, welcher bewirkt oder anweist, dass der Schweißstrom an dem berechneten Zeitpunkt erhöht wird.

Die Steuereinrichtung kann auch dazu eingerichtet sein, andere Schweißparameter der Schweißvorrichtung (insbesondere der Schweißstromquelle) oder eines Schweißprozesses unter Verwendung des ausgegebenen Drahtspiel-Werts zu berechnen und einen entsprechenden Steuerbefehl auszugeben. Solche Schweißparameter können beispielsweise weitere Zündparameter (oder: Startparameter) eines Zündprozesses oder Wiederzündprozesses sein, umfassend etwa:
- einen Schweißspannungswert,
- einen Schweißstromwert und/oder
- eine Drahtvorschubgeschwindigkeit,
   sowie jeweils Zeitpunkte, an denen Änderungen in diesen Schweißparametern durchgeführt werden sollen.

Gemäß einigen Ausführungsformen, Varianten, oder Verfeinerungen von Ausführungsformen ist die Steuereinrichtung dazu eingerichtet, das Drahtspiel-Messverfahren regelbasiert automatisch durchzuführen. Auf diese Weise kann vermieden werden, dass der Drahtspiel-Wert, welcher für die Steuerung von Schweißprozessen oder anderen Einstellungen aktuell verwendet wird, zu sehr von einem (sich mit der Zeit ändernden) tatsächlichen Drahtspiel-Wert abweicht. Beispielsweise kann das Drahtspiel-Messverfahren nach jeder Schweißnaht durchgeführt werden.

Gemäß einigen Ausführungsformen, Varianten, oder Verfeinerungen von Ausführungsformen ist die Steuereinrichtung außerdem dazu eingerichtet, eine Information über eine vordefinierte Länge, über welche das Drahtelektrodenende über ein Ende des Kontaktrohrs hinausstehen soll (sog. "contact tip to workpiece distance, CTWD) zu empfangen, und die Fördereinrichtung zu steuern, die Drahtelektrode basierend auf dem ausgegebenen Drahtspiel-Wert derart zu fördern, dass das Drahtelektrodenende über die vordefinierte Länge über das Ende des Kontaktrohrs hinaussteht. Das präzise Einstellen einer gewünschten Stickout-Länge ist beispielsweise für automatisierte Schweißverfahren bedeutsam, etwa unter Verwendung von Linearfahrwerken, wobei beispielsweisedurch einen Roboter, welcher den Schweißbrenner führt, die Drahtelektrodenspitze präzise in einen gewünschten Abstand zu dem Werkstück gebracht werden kann. Die erfindungsgemäße Schweißvorrichtung kann somit auch einen Roboter umfassen, welcher dazu eingerichtet ist, den Schweißbrenner zu führen.

Gemäß einigen Ausführungsformen, Varianten, oder Verfeinerungen von Ausführungsformen erfolgt die Messung der Drahtvorschublänge unter Verwendung eines Zeitgebers und/oder eines Drehzahlgebers erfolgt. Beides kann in einer Messeinrichtung (oder: einem Encoder) der Fördereinrichtung integriert sein, sodass dieser einen numerischen Wert ausgibt, welcher einer Drahtvorschublänge entspricht (z. B. in Millimetern). Diese Drahtvorschublänge kann kumuliert werden, um eine kumulierte Drahtvorschublänge zu erhalten, sodass z. B eine Drahtvorschublänge von +3mm, gefolgt von einer Drahtvorschublänge von -2mm, eine kumulierte Drahtvorschublänge von +1mm ergibt.

Gemäß einigen Ausführungsformen, Varianten, oder Verfeinerungen von Ausführungsformen ist die Schweißvorrichtung mit einer Mehrzahl von Komponenten verbindbar und weist einen Datenspeicher auf, welcher zum Speichern jedes für eine Komponente oder Kombination von Komponenten ermittelten Drahtspiel-Wertes und zum Bereitstellen der gespeicherten Drahtspiel-Werte für Schweißprozesse unter Verwendung einer der Mehrzahl von Komponenten eingerichtet ist.

Die Mehrzahl von Komponenten kann beispielsweise mindestens einen weiteren Schweißbrenner, mindestens eine weitere Fördereinrichtung und/oder mindestens ein Schlauchpaket umfassen.

Das regelbasierte Ausführen des Drahtspiel-Messverfahrens kann beinhalten, dass dieses immer dann ausgeführt wird, wenn mindestens eine Komponente ausgetauscht wird, oder zumindest wenn mindestens eine Komponente ausgetauscht wird, für welche hinterlegt ist, dass diese eine Änderung des Drahtspiel-Werts verursachen kann. Somit würde das Drahtspiel-Messverfahren beispielsweise bei Austausch eines Schlauchpakets durchgeführt werden, jedoch nicht bei Austausch einer Gaszufuhr oder dergleichen.

Eine Benutzerschnittstelle der Schweißvorrichtung kann auch dazu eingerichtet sein, einem Benutzer die Option zu geben, das Drahtspiel-Messverfahren auf Wunsch auszulösen, beispielsweise zur Kontrolle des Seelenverschleißes. Das Drahtspiel-Messverfahren kann auch über eine Fernwartungs-Schnittstelle der Schweißvorrichtung auslösbar sein.

Weiterhin stellt die Erfindung, gemäß einem zweiten Aspekt, ein Verfahren zum Bestimmen eines Drahtspiel-Werts einer Schweißvorrichtung, welche einen Schweißbrenner und eine Fördereinrichtung mit einem Vorwärtsbetrieb zum Fördern einer Drahtelektrode der Schweißvorrichtung in Vorwärtsrichtung und mit einem Rückwärtsbetrieb zum Fördern der Drahtelektrode in Rückwärtsrichtung aufweist, umfassend zumindest die folgenden (insbesondere automatisierten) Schritte:
- Fördern der Drahtelektrode in dem Vorwärtsbetrieb, bis ein Kurzschluss zwischen der Drahtelektrode und einem Werkstück festgestellt wird;
- daraufhin Fördern der Drahtelektrode in dem Rückwärtsbetrieb, bis die Drahtfördergeschwindigkeit einen Nulldurchgang vom Positiven ins Negative durchführt;
- daraufhin Starten einer Messung der Drahtvorschublänge,
- Beenden der Messung der Drahtvorschublänge, sobald ein Aufbruch des Kurzschlusses festgestellt wird; und
- Ausgeben eines Drahtspiel-Werts basierend auf der gemessenen Drahtvorschublänge.

Die Erfindung stellt außerdem, gemäß einem dritten Aspekt, ein Verfahren zum Betreiben einer Schweißvorrichtung bereit, umfassend zumindest die Schritte:
Bereitstellen des ausgegebenen Drahtspiel-Werts gemäß dem Verfahren nach einer Ausführungsform des zweiten Aspekts der vorliegenden Erfindung; und
Einstellen einer Position eines Drahtelektrodenendes einer Drahtelektrode der Schweißvorrichtung unter Verwendung des bereitgestellten Drahtspiel-Werts und/oder
Einstellen eines Zeitpunkts, an welchem ein Steuersignal ausgegeben wird, unter Verwendung des bereitgestellten Drahtspiel-Werts.

Gemäß einigen Ausführungsformen, Varianten, oder Verfeinerungen von Ausführungsformen ist der einzustellende Zeitpunkt, an welchem das Steuersignal ausgegeben wird, ein Zeitpunkt, an welchem ein Schweißstrom der Schweißvorrichtung und/oder eine Schweißspannung der Schweißvorrichtung erhöht oder verringert wird.

Gemäß einem vierten Aspekt stellt die Erfindung ein Computerprogrammprodukt bereit, umfassend ausführbaren Programmcode, welcher dazu eingerichtet ist, wenn er ausgeführt wird, das Verfahren gemäß einer Ausführungsform des zweiten oder des dritten Aspekts der vorliegenden Erfindung durchzuführen. Das Computerprogrammprodukt kann beispielsweise zur Ausführung durch eine Recheneinrichtung in einer Schweißstromquelle oder einem Drahtvorschubkoffer, etwa einen Mikroprozessor, eine anwendungsspezifische integrierte Schaltung (ASIC), eine speicherprogrammierbare Steuerung (SPS) und/oder dergleichen ausgelegt sein.

Gemäß einem fünften Aspekt stellt die Erfindung ein nicht-flüchtiges, computerlesbares Datenspeichermedium bereit, umfassend ausführbaren Programmcode, welcher dazu ausgelegt ist, wenn er ausgeführt wird, das Verfahren einer Ausführungsform des zweiten oder des dritten Aspekts der vorliegenden Erfindung durchzuführen. Bei dem Datenspeichermedium kann es sich beispielsweise um eine Festplatte, einen Festkörperspeicher, eine CD, eine DVD, eine Memorycard und dergleichen handeln.

Gemäß einem sechsten Aspekt stellt die Erfindung einen Datenstrom oder eine Datenstruktur bereit, welcher bzw. welche ausführbaren Programmcode umfasst oder dazu ausgelegt ist, ausführbaren Programmcode zu erzeugen, und wobei der ausführbare Programmcode dazu ausgelegt ist, wenn er ausgeführt wird, das Verfahren gemäß einer Ausführungsform des zweiten oder des dritten Aspekts der vorliegenden Erfindung durchzuführen.

Weitere bevorzugte Ausführungsformen, Varianten und Weiterbildungen von Ausführungsformen ergeben sich aus den Unteransprüche sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: ein schematisches Blockdiagramm zur Erläuterung einer Schweißvorrichtung gemäß einer Ausführungsform der vorliegenden Erfindung;
- Fig. 2: in drei übereinander auf derselben Zeitachse liegenden Graphen die Funktionsweise der Schweißvorrichtung aus Fig. 1;
- Fig. 3: ein schematisches Flussdiagramm zur Erläuterung der Verfahrensschritte eines Verfahrens gemäß einer Ausführungsform der vorliegenden Erfindung;
- Fig. 4: ein schematisches Flussdiagramm zur Erläuterung der Verfahrensschritte eines Verfahrens gemäß einer weiteren Ausführungsform der vorliegenden Erfindung;
- Fig. 5: Graphen zur Illustration eines vorteilhaften Schweißverfahren unter Verwendung der vorliegenden Erfindung;
- Fig. 6: Graphen zur Illustration des Schweißverfahrens aus Fig. 5 ohne Verwendung der vorliegenden Erfindung;
- Fig. 7: ein schematisches Blockdiagramm zum Erläutern eines Computerprogramms gemäß einer weiteren Ausführungsform der vorliegenden Erfindung;
- Fig. 8: ein schematisches Blockdiagramm zum Erläutern eines Datenspeichermedium gemäß noch einer weiteren Ausführungsform der vorliegenden Erfindung;
- Fig. 9: mögliche Quellen eines Drahtspiels in einem Vorwärtsbetrieb einer Fördereinrichtung einer Schweißvorrichtung; und
- Fig. 10: mögliche Quellen eines Drahtspiels in einem Rückwärtsbetrieb einer Fördereinrichtung einer Schweißvorrichtung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

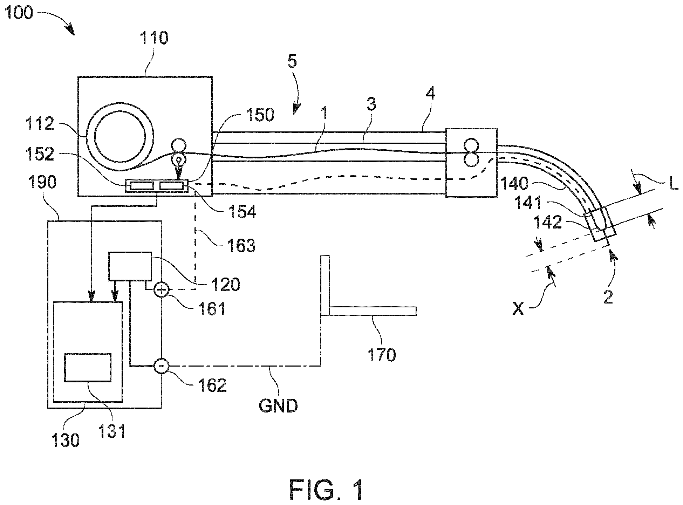

Fig. 1 zeigt zunächst ein schematisches Blockdiagramm zur Erläuterung einer Schweißvorrichtung 100 gemäß der vorliegenden Erfindung. Die Funktionsweise dieser Schweißvorrichtung 100 wird unter anderem auch anhand der nachfolgenden Figuren erläutert werden.

Gemäß Fig. 1 umfasst die Schweißvorrichtung 100 eine Fördereinrichtung 110 mit einem Vorwärtsbetrieb V (nicht dargestellt; siehe Fig. 9) zum Fördern einer abschmelzenden Drahtelektrode 1 der Schweißvorrichtung 100 in Vorwärtsrichtung, d.h. in Richtung von einer Drahtzufuhr hin zu einem Schweißbrenner 140 der Schweißvorrichtung 100, und mit einem Rückwärtsbetrieb R (nicht dargestellt; siehe Fig. 10) zum Fördern der Drahtelektrode 1 in Rückwärtsrichtung, d.h. von dem Schweißbrenner 140 in Richtung der Drahtzufuhr (nicht gezeigt).

Die Fördereinrichtung 110 kann beispielsweise als Teil eines Drahtvorschubkoffers realisiert sein, wie in Fig. 1 angedeutet. Sie umfasst eine Drahtzufuhr 112, welche entweder ein Drahtlager (z. B. für eine Drahtspule innerhalb des Drahtvorschubkoffers) oder eine Einfädeleinrichtung zum Einfädeln eines Drahts aus einem externen Drahtlager, z. B. einem Fass, als eine Drahtelektrode 1 sein kann.

Zwischen dem Schweißbrenner 140 und der Fördereinrichtung 110 verläuft die Drahtelektrode 1 typischerweise innerhalb eines Schlauchpakets 5, und zwar innerhalb einer inneren Drahtführung bzw. Drahtseele 3, welche in einem äußeren Schlauch 4 angeordnet ist.

Der Schweißbrenner 140 umfasst ein Kontaktrohr 141 mit einer Kontaktrohrlänge L, welches elektrisch mit einem definierten elektrischen Potenzial (Schweißpotenzial) verbunden oder verbindbar ist und mittels welchem ein elektrischer Kontakt zu der Drahtelektrode 1 herstellbar ist, damit zwischen der Drahtelektrode 1 und einem zu schweißenden Werkstück 170, welches auf einem zweiten elektrischen Potenzial liegt, ein Lichtbogen ausbildbar ist.

Die Schweißvorrichtung 100 umfasst außerdem eine elektrische-Parameter-Messeinrichtung 120, welche zum Messen eines elektrischen Parameters zwischen der Drahtelektrode 1 und dem Werkstück 170 eingerichtet ist. Dabei kann es sich insbesondere um eine Spannungs-Messeinrichtung handeln, welche dazu eingerichtet ist, eine vorliegende Spannung zwischen der Drahtelektrode 1 und dem Werkstück 170 zu messen, und insbesondere einen Kurzschluss zwischen Drahtelektrode 1 und Werkstück zu erkennen.

Die Schweißvorrichtung 100 umfasst weiterhin eine Steuereinrichtung 130, welche zum Durchführen eines Drahtspiel-Messverfahrens eingerichtet ist. Hierzu kann die Schweißvorrichtung 100 über zusätzliche Messeinrichtungen verfügen oder Zugang zu den Messergebnissen solcher Messeinrichtungen haben. Zu den zusätzlichen Messeinrichtungen kann insbesondere eine Messeinrichtung 150 der Fördereinrichtung 110 gehören, welche vorteilhaft einen Drehzahlgeber 152 und/oder einen Zeitgeber 154 aufweist. Eine solche Messeinrichtung 150 kann dazu eingerichtet sein, durch Kombination der Messsignale des Drehzahlgebers 152 und des Zeitgebers 154 ein Drahtvorschublänge-Signal auszugeben, welches eine (insbesondere kumulative) Drahtvorschublänge, d.h. eine Länge (z.B. in Millimetern) angibt, um welche die Drahtelektrode 1 durch die Fördereinrichtung 110 gefördert wurde.

Wie in Fig. 1 dargestellt ist, können die elektrische-Parameter-Messeinrichtung 120 und/oder die Steuereinrichtung 130 in eine Schweißstromquelle 190 der Schweißvorrichtung 100 integriert sein. Die Schweißstromquelle 190 hat zum einen die Aufgabe, Schweißprozesse zu steuern, was ebenfalls durch die Steuereinrichtung 130 erfolgen kann. Zum anderen stellt sie an einem ersten elektrischen Anschluss 161 ein Schweißpotenzial bereit, welches über eine elektrische Leitung 163 an dem Kontaktrohr 141 und damit an der Drahtelektrode 1 anlegbar ist. Schließlich stellt sie an einem zweiten elektrischen Anschluss 162 ein zweites elektrisches Potenzial (z. B. Erde, GND) bereit, mit welchem das Werkstück 170 beaufschlagbar ist, sodass zwischen Drahtelektrodenende 2 und Werkstück 170 dann gemäß der Potenzialdifferenz ein Schweißstrom fließen kann.

Die Steuereinrichtung 130 ist dazu eingerichtet, zum Durchführen des Drahtspiel-Messverfahrens:
- die Fördereinrichtung 110 zu steuern, die Drahtelektrode 1 in dem Vorwärtsbetrieb V zu fördern, bis mittels der elektrische-Parameter-Messeinrichtung 120 ein Kurzschluss zwischen der Drahtelektrode (1) und dem Werkstück festgestellt wird;
- daraufhin die Fördereinrichtung 110 zu steuern, die Drahtelektrode 1 in dem Rückwärtsbetrieb R zu fördern, bis die Drahtfördergeschwindigkeit an der Fördereinrichtung 110 einen Nulldurchgang vom Positiven ins Negative durchführt;
- daraufhin eine Messung der Drahtvorschublänge zu starten, und diese (erst, bzw. genau dann) zu beenden, sobald durch die elektrische-Parameter-Messeinrichtung 120 ein Aufbruch des Kurzschlusses festgestellt wird; und
- basierend auf der gemessenen Drahtvorschublänge einen Drahtspiel-Wert D1 auszugeben.

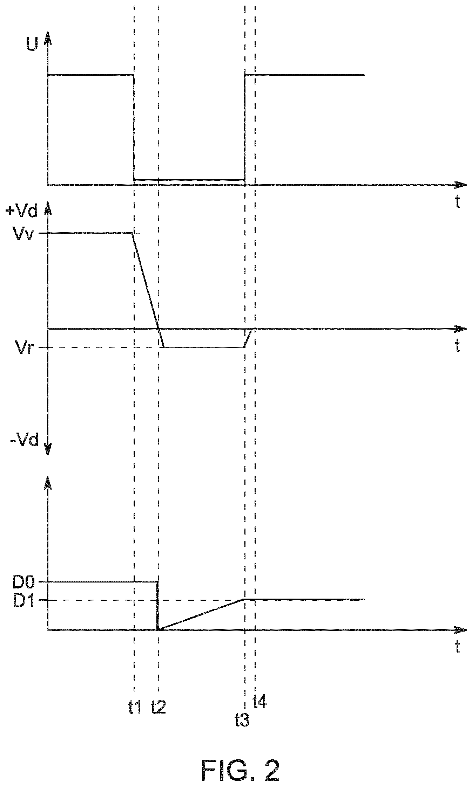

Fig. 2 illustriert in drei übereinander auf derselben Zeitachse t liegenden Graphen, auf welche Weise die erfindungsgemäße Vorrichtung 100 das Drahtspiel-Messverfahren durchführen kann.

Der oberste Graph in Fig. 2 zeigt die Schweißspannung U als Funktion der Zeit. Der mittlere Graph zeigt die Drahtvorschubgeschwindigkeit Vd an der Fördereinrichtung 110 als Funktion der Zeit. Hierbei bedeutet eine positive Drahtvorschubgeschwindigkeit, +Vd, eine Förderung der Drahtelektrode 1 in Richtung des Kontaktrohres 141 im Vorwärtsbetrieb V der Fördereinrichtung 110, und eine negative Drahtvorschubgeschwindigkeit, -Vd, eine Förderung der Drahtelektrode 1 in Richtung weg von dem Kontaktrohr 141 (d. h. zum Drahtelektrodenvorrat hin) im Rückwärtsbetrieb R der Fördereinrichtung 110. Der untere Graph zeigt einen in der Steuereinrichtung 130 gespeicherten Drahtspiel-Wert in Längeneinheiten.

Zu Beginn der dargestellten Zeitachse t ist das Drahtelektrodenende 2 durch einen - nicht, oder nicht genau - bekannten Abstand von dem Werkstück getrennt und wird mit konstanter Geschwindigkeit Vv vorwärts gefördert. In der Steuereinrichtung 130 ist bis dahin noch der vorhergehende Drahtspiel-Wert D0 gespeichert, welcher beispielsweise vor einem Drahtelektrodenwechsel oder einem Wechsel des Schlauchpakets 5 oder einer anderen Komponente der Schweißvorrichtung 100 ermittelt wurde.

Zum Zeitpunkt t1 erfasst die elektrische-Parameter-Messeinrichtung 120 einen Kurzschluss, ersichtlich am Spannungseinbruch in der Schweißspannung im obersten Graphen. Wie erwähnt, kann die elektrische-Parameter-Messeinrichtung 120 hierzu eine Spannungsmesseinheit umfassen oder aus einer solchen bestehen.

Die Steuereinrichtung 130 steuert, nachdem sie die Information über den Kurzschluss von der elektrische-Parameter-Messeinrichtung 120 erhalten hat, sofort die Fördereinrichtung 110, von dem Vorwärtsbetrieb V in den Rückwärtsbetrieb R zu wechseln. Insbesondere soll die Fördereinrichtung 110 die Drahtelektrode 1 mit der negativen Geschwindigkeit Vr statt mit der positiven Geschwindigkeit Vv fördern. Vr ist vorzugsweise betragsmäßig kleiner als Vv, beispielsweise |Vr|<0,5 Vv (oder: -Vr<0,5Vv), |Vr|<0,3 Vv, |Vr|<0,2 Vv oder dergleichen. Insbesondere kann Vv im Bereich von 0,5m/min bis 30m/min und/oder Vr im Bereich von -10m/min bis -2m/min liegen. Vorzugsweise liegt Vv zwischen 2-5m/min und Vr zwischen -5 bis -2m/min.

Wie sehr gut im mittleren Graphen von Fig. 2 erkennbar ist, dauert es einige Zeit, um die Geschwindigkeit von Vv auf Vr zu ändern, da die Fördereinrichtung 110 nicht unbegrenzt stark verzögern (oder: "rückwärts beschleunigen") kann. An der Fördereinrichtung 110 liegt jedoch, beispielsweise ausgehend von einem Drehzahlgeber 152 der Fördereinrichtung 110, die Information vor, zu welchem Zeitpunkt t2 die Fördereinrichtung 110 (bei weiter durch die Fördereinrichtung 110 ausgeübter Verzögerung bzw. Beschleunigung rückwärts) genau stillsteht, d. h., die Drahtvorschubgeschwindigkeit genau auf null gesunken ist.

Zu diese Zeitpunkt t2 startet die Steuereinrichtung 130 eine Messung der Drahtvorschublänge, beispielsweise, in dem sie einen Zeitgeber 154 startet und optional (ab sofort oder weiterhin) den Drehzahlgeber 154 der Fördereinrichtung 110 ausliest. Es versteht sich, dass aus einer Drehzahlmessung und einer Zeitmessung, sowie einem Umrechnungsfaktor, wieviel Drahtvorschublänge eine volle Umdrehung der Fördereinrichtung 110 entspricht, eine tatsächlich geförderte Drahtvorschublänge berechenbar ist. Ebenso versteht es sich, dass bei Verwendung einer anderen Fördereinrichtung 110 auch andere Techniken verwendet werden können. Vorteilhaft gibt die Messeinrichtung 150 bereits ein Signal aus, welches (z. B. unter Verwendung des Drehzahlgebers 154 und des Zeitgebers 154) die Drahtvorschublänge selbst indiziert.

Da der Steuereinrichtung 130 die Geschwindigkeit Vr bekannt ist, kann prinzipiell an dieser Stelle auch auf das mitlaufende Auslesen des Drehzahlgebers 152 verzichtet werden, wodurch nur ein geringfügiger Messfehler zu Beginn des Messens entsteht (siehe unten).

Zum Zeitpunkt t2 wird somit der im unteren Graphen von Fig. 2 aufgezeichnete Drahtspiel-Wert zunächst vorläufig auf null gesetzt, und von da ab durch die Steuereinrichtung 130 mit fortlaufender Messung der Drahtvorschublänge kontinuierlich erhöht.

Die Geschwindigkeit Vr kann im Verhältnis zu der maximalen, durch die Fördereinrichtung 110 ausübbaren Verzögerung so gewählt werden, dass ein Messfehler, der dadurch entsteht, dass zum Zeitpunkt t2 die Drahtvorschubgeschwindigkeit noch nicht den Wert Vr erreicht hat, unter einem vorbestimmten Grenzwert bleibt, z.B. unter 10%, unter 5%, oder dergleichen. Alternativ oder zusätzlich kann dieser Messfehler auch rechnerisch kompensiert werden, etwa mit einer durch Experimente vorgegebenen Formel in Abhängigkeit von dem schlussendlich ermittelten Drahtspiel-Wert D1.

Wie in Fig. 2 weiter ersichtlich ist, wird die Messung der Drahtvorschublänge weiter geführt bis zu einem Zeitpunkt t3, an welchem das Aufbrechen des Kurzschlusses durch die elektrische-Parameter-Messeinrichtung 120 erkannt wird, denn das Aufbrechen des Kurzschlusses bedeutet, dass sich das Drahtelektrodenende 2 gerade von dem Werkstück gelöst hat. Zu diesem Zeitpunkt t3 weist die Steuereinrichtung 130 die Fördereinrichtung 110 somit an, den Drahtvorschub anzuhalten, d. h., Vd=0 zu setzen, was zum Zeitpunkt t4 dann eingetreten ist. Die zwischen t2 und t3 (mittelbar) gemessene (betragsmäßige) Drahtförderlänge in Rückwärtsrichtung stellt somit den neu gemessenen Drahtspiel-Wert D1 dar.

Wann immer die Drahtelektrode 1 nun rückwärts gefahren wird, insbesondere nach einem Kurzschluss (d. h. nach Berührung des Werkstücks), kann der gemessene Drahtspiel-Wert D1 verwendet werden, um Schweißprozesse, welche von einer genauen Kenntnis des Zeitpunkts des Kurzschlussaufbruchs profitieren, zu verbessern, da diese Schweißprozesse nun unter Verwendung des akkurat bestimmten Drahtspiel-Werts D1 durchgeführt werden können.

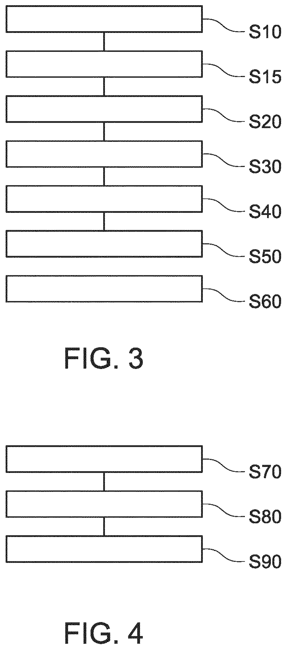

Hierzu zeigt Fig. 3 ein schematisches Flussdiagramm zur Erläuterung der Verfahrensschritte eines Verfahrens gemäß einer Ausführungsform der vorliegenden Erfindung in abstrakter Weise. Es versteht sich, dass die Verfahrensschritte auch unabhängig von der erfindungsgemäßen Schweißvorrichtung 100 durchführbar sind, aber auch gemäß allen in Bezug auf die erfindungsgemäße Schweißvorrichtung 100 beschriebenen Optionen, Varianten und Verfeinerungen anpassbar ist und umgekehrt.

In einem Schritt S10 wird ein Steuerbefehl empfangen, das Drahtspiel-Messverfahren durchzuführen. Dieser Steuerbefehl kann regelbasiert erfolgen, etwa jedes Mal, wenn eine Komponente der Schweißvorrichtung 100 gewechselt wird, welche eine Änderung des Drahtspiel-Werts D0, D1 mit sich ziehen kann. Eine solche Komponente kann beispielsweise der Schweißbrenner 140, ein Schlauchpaket 5 zwischen Schweißstromquelle und Schweißbrenner, die Drahtelektrode 1 selbst oder dergleichen sein. Der Steuerbefehl kann auch, alternativ oder zusätzlich, periodisch ausgegeben werden, etwa wenn bekannt ist, dass der Drahtspiel-Wert D0, D1 sich üblicherweise innerhalb eines bestimmten Zeitraums um mehr als x% verändert, wobei x% einen wählbaren Schwellwert darstellt.

Je nach konkreter Realisierung kann in einem optionalen Schritt S15 zunächst die Drahtelektrode 2 so weit zurückgezogen werden, dass sichergestellt ist, dass sie sich nicht (mehr) im Kontakt mit dem Werkstück 170 befindet, beispielsweise um einen Wert, der größer ist als der Abstand vom Kontaktrohrende 142 zum Werkstück 170, optional erhöht um einen geschätzten (oder voreingestellten, oder maximalen gemessenen) Drahtspiel-Wert.

In einem Schritt S20 wird die Drahtelektrode 1 in dem Vorwärtsbetrieb V gefördert, bis ein Kurzschluss zwischen der Drahtelektrode 1 und einem Werkstück 170 festgestellt wird.

In einem Schritt S30 wird daraufhin die Drahtelektrode 1 in dem Rückwärtsbetrieb R gefördert, bis die Drahtfördergeschwindigkeit einen Nulldurchgang vom Positiven ins Negative durchführt. Hierzu kann eine Ermittlung von Sensordaten oder dergleichen der Fördereinrichtung 110 (insbesondere der Messeinrichtung 150) erfolgen, wie im Vorangegangenen bereits ausführlich erläutert wurde.

In einem Schritt S40 wird eine (indirekte) Messung der Drahtvorschublänge gestartet, insbesondere basierend auf einer Zeitmessung, optional basierend auf einer Zeitmessung in Kombination mit Drehzahldaten der Fördereinrichtung 110. Diese Messung wird fortgesetzt, bis in einem Schritt S50 die Messung der Drahtvorschublänge beendet wird, und zwar sobald ein Aufbruch des Kurzschlusses festgestellt wird. Der Schritt S40 kann, wie im Vorangehenden beschrieben wurde, genau dann durchgeführt werden (d.h. die Messung gestartet werden), wenn die Drahtfördergeschwindigkeit en Nulldurchgang vom Positiven ins Negative durchführt. Alternativ können die Schritte S40 und/oder S50 auch zu früheren oder späteren Zeitpunkten erfolgen, wobei vorteilhaft entsprechende Abweichungen von dem tatsächlichen Drahtspiel-Wert D1 mathematisch herausgerechnet werden können.

In einem Schritt S60 wird ein Drahtspiel-Wert D1 basierend auf der gemessenen Drahtvorschublänge ausgegeben. Insbesondere kann als Drahtspiel-Wert D1 die gemessene Drahtvorschublänge selbst ausgegeben werden, oder die gemessene Drahtvorschublänge, welche mit einer Korrekturfunktion noch angepasst wurde, beispielsweise zur Kompensation von Trägheitseffekten, Signallaufzeiten und/oder dergleichen mehr.

Fig. 4 zeigt ein schematisches Flussdiagramm zum Erläutern eines Verfahrens gemäß einer weiteren Ausführungsform der vorliegenden Erfindung, nämlich eines Verfahrens zum Betreiben einer Schweißvorrichtung 100. Auch dieses Verfahren kann mittels der erfindungsgemäßen Schweißvorrichtung 100 durchgeführt werden, insbesondere durch die Steuereinrichtung 130, aber auch separat davon.

In einem Schritt S70 wird der gemäß den Schritten S10 bis S60 ausgegebene Drahtspiel-Wert D1 bereitgestellt. Die Schritte S60 und S70 können zeitgleich erfolgen bzw. identisch sein. Es kann aber auch ein Datenspeicher 131 vorgesehen oder vorhanden sein (in Fig. 1 beispielhaft als Teil der Steuereinrichtung 130) gezeigt, in welchem einer oder mehrere bereitgestellte Drahtspiel-Werte D1 gespeichert sind und bei Bedarf abrufbar sind. Beispielsweise kann die zu betreibende Schweißvorrichtung 100 dazu ausgelegt sein, mit vielen verschiedenen Komponenten betrieben zu werden. Bei solchen Komponenten kann es sich beispielsweise um Schweißbrenner 140, Fördereinrichtungen 110, Schlauchpakete 5 und/oder dergleichen handeln. Jede solche Komponente, oder auch bestimmte Kombinationen von Komponenten, können mit einem jeweils unterschiedlichen Drahtspiel-Wert D1 einhergehen, welcher sich auch bei jedem Wechsel mindestens einer Komponente verändern kann.

Die Art der jeweils aktuell verwendeten Komponenten ist der Schweißstromquelle 190 üblicherweise bekannt, da sich die Komponenten - typischer Weise über ein Bus-System - an der Schweißstromquelle 190 zumindest mit ihrer Typennummer oder dergleichen identifizieren.

Somit kann vorgesehen sein, dass bei Veränderung der verwendeten (d.h., mit der Schweißvorrichtung 100 verbundenen) Komponenten zunächst geprüft wird (etwa durch die Steuereinrichtung 130), ob in dem Datenspeicher 131 ein Drahtspiel-Wert für die aktuell verwendeten Komponenten (bzw. die aktuell angeschlossene Kombination von Komponenten) hinterlegt ist, und, falls dies der Fall ist, dieser Drahtspiel-Wert bereitgestellt wird.

Alternativ kann vorgesehen sein, dass stets, wenn mindestens eine neue Komponente (oder mindestens eine neue Komponente, von der bekannt ist, dass sie eine Veränderung des Drahtspiels verursachen kann) angeschlossen wird, das Verfahren gemäß Fig. 2 durchgeführt wird, um einen neuen Drahtspiel-Wert D1 bereitzustellen.

In einem Schritt S80 wird eine Position eines Drahtelektrodenendes 2 einer Drahtelektrode 1 der Schweißvorrichtung 100 unter Verwendung des bereitgestellten Drahtspiel-Werts D1 eingestellt. Beispielsweise kann eine Länge x, über welche das Drahtelektrodenende 2 über ein Kontaktrohrende 142 des Kontaktrohrs 141 hinaussteht (sog. CTWD", siehe auch Fig. 1) unter Verwendung des bereitgestellten Drahtspiel-Werts D1 eingestellt werden.

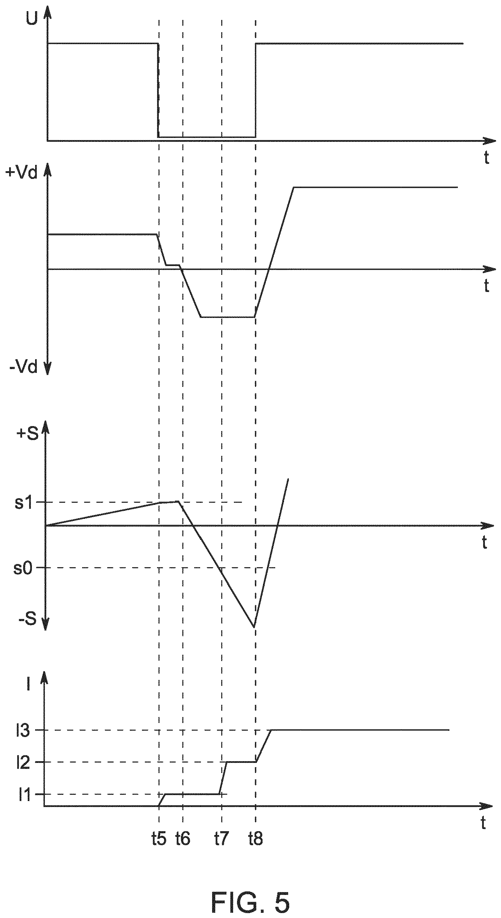

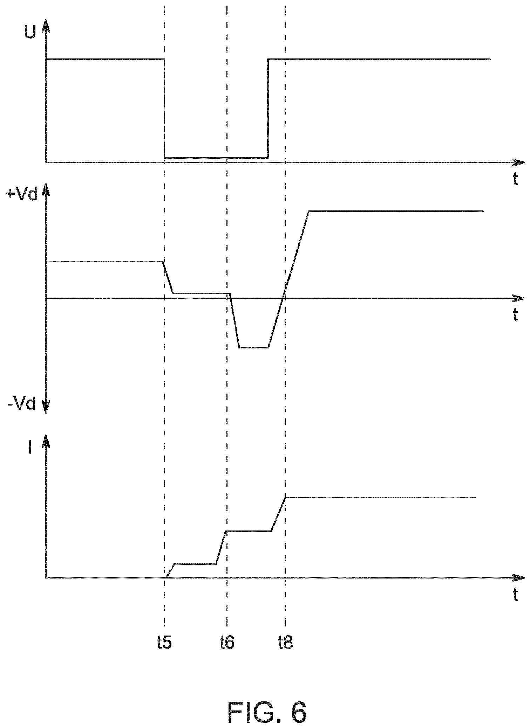

Alternativ oder zusätzlich kann in einem Schritt S90 ein Zeitpunkt, an welchem ein Steuersignal (z.B. durch die Steuereinrichtung 130) ausgegeben wird, unter Verwendung des bereitgestellten Drahtspiel-Werts D1 eingestellt werden. Ein Beispiel hierfür wird anhand der nachfolgenden Figuren Fig. 5 und Fig. 6 erläutert.

Fig. 5 illustriert ein vorteilhaftes Schweißverfahren, in welchem eine Zündung bzw. Wiederzündung des Schweißlichtbogens nach dem Kurzschluss bei rückziehender Drahtelektrode 1 erfolgen soll. Die nachfolgende Fig. 6 zeigt ein vergleichbares Schweißverfahren aus dem Stand der Technik.

Von oben nach unten zeigen die einzelnen Graphen in Fig. 5 die Schweißspannung U, die Drahtvorschubgeschwindigkeit Vd an der Fördereinrichtung 110 (nicht: des Drahtelektrodenendes 2), eine kumulative Drahtvorschublänge s durch die Fördereinrichtung 110, sowie den Schweißstrom I, jeweils in einer Situation in der das Drahtelektrodenende 2 zunächst ohne Lichtbogen zu dem Werkstück hin gefördert wird, um einen neuen Lichtbogen zu zünden, d. h., um eine Wiederzündung durchzuführen. In Fig. 6 fehlt gegenüber Fig. 5 der dritte Graph, d.h. der Graph der kumulativen (oder: kumulierten) Drahtvorschublänge s.

Eine gute zeitliche Abstimmung der Steuerbefehle, d.h. eine Wiederzündung kurz bevor die Drahtelektrode den Kontakt mit dem Werkstück verliert und der Kurzschluss aufgehoben wird, verringert Schweißspritzer und verbessert das Schweißergebnis somit beträchtlich. Wird der Zündstrom I2 (ein für die Wiederzündung vorgesehener Schweißstrom mit einem bestimmten Stromwert) für die Wiederzündung zu früh gestartet, kann eine Stickoutüberhitzung, d. h. eine Überhitzung des Drahtelektrodenendes 2 erfolgen. Wird der Zündstrom I2 zu spät gezündet, kann dies zu einem Lichtbogenabriss führen. Aufgrund des Drahtspiels ist aber der Zeitpunkt, an dem der Kurzschluss aufgehoben wird, nicht identisch mit dem Zeitpunkt, ab welchem sich die Fördereinrichtung 110 im Rückwärtsbetrieb R befindet, da zunächst das vorhandene Drahtspiel "aufgebraucht" werden muss.

Wie Fig. 5 zeigt, nähert sich das Drahtelektrodenende 2 zunächst mit konstanter Drahtvorschubgeschwindigkeit (Vd=const., somit linear wachsende Drahtvorschublänge s) dem Werkstück, bei I=0. Zu einem Zeitpunkt t5 wird (insbesondere durch die elektrische-Parameter-Messeinrichtung 120) ein Kurzschluss festgestellt (Spannungseinbruch), woraufhin sofort der Drahtvorschub verzögert (verlangsamt) wird, und der Anstieg der kumulativen Drahtvorschublänge s entsprechend abflacht. Mit dem Kurzschluss beginnt ein erster, nichtverschwindender, Schweißstrom I1 zu fließen, entsprechend der nicht ganz auf null gesunkenen Spannung 0.

Zu einem Zeitpunkt t6 hat die Verzögerung der Fördereinrichtung 110 bewirkt, dass die Drahtvorschubgeschwindigkeit Vd auf null gesunken ist, sodass eine weitere Verzögerung (d. h., negative Beschleunigung) der Fördereinrichtung 110 nun im Rückwärtsbetrieb R von jetzt an die kumulative Drahtvorschublänge s wieder verringert.

Im Stand der Technik (siehe Fig. 6) würde nun kurz vor dem Zeitpunkt t6 (den die Steuereinrichtung 130 z.B. über den Drehzahlgeber 152 oder eine bekannte Verzögerungskraft der Fördereinrichtung 110 grob vorhersagen kann) den Schweißstrom I auf den Zündstrom I2 setzen. Aufgrund des - im Stand der Technik unbekannten - Drahtspiels ist der Start des Zündstroms, wie bereits erläutert, daher mit einiger Unsicherheit behaftet.

Wie in Fig. 5 gezeigt ist, kann mit der vorliegenden Erfindung im Gegensatz dazu der Zündstrom I2 genau dann eingeschaltet werden (Zeitpunkt t7), wenn die kumulative Drahtvorschublänge s einen vorbestimmten Wert s0 erreicht hat. Dieser Wert s0 kann beispielweise ein Wert sein, an welchem die Differenz zwischen der maximalen kumulativen Drahtvorschublänge s1 zum Zeitpunkt t6 und der aktuellen kumulativen Drahtvorschublänge genau dem ermittelten Drahtspiel-Wert D1, oder einem um einen Sicherheitspuffer vergrößerten Drahtspiel-Wert D2 entspricht. Der vergrößerte Drahtspiel-Wert D2 kann beispielweise durch D2=D1+d errechnet werden, mit d einem vorbestimmten Sicherheitspufferwert, beispielsweise von 1mm, 2mm, 3mm oder dergleichen. Der Sicherheitspufferwert kann durch die Steuereinrichtung 130 angepasst werden, beispielsweise basierend auf einer bekannten verwendeten Drahtelektrode 1, einem bekannten verwendeten Schweißbrenner 140 und/oder dergleichen. Der vergrößerte Drahtspiel-Wert D2 kann auch unter Verwendung eines relativen Sicherheitspuffers aus dem ermittelten Drahtspiel-Wert D1 berechnet werden, also zum Beispiel D2=D1*(1+d%), wobei d% beispielsweise zwischen 5% und 30%, insbesondere zwischen 10% und 20% liegen kann (Grenzwerte jeweils mit umfasst).

Mit Aufbruch des Kurzschlusses zum Zeitpunkt t8 wird dann der Drahtvorschub durch die Fördereinrichtung 110 wieder vorwärts beschleunigt, und der Schweißstrom I auf seinen Maximalwert I3 gesetzt, bzw. eine Erhöhung des Schweißstroms I von dem Zündstrom I2 auf den Maximalwert I3 begonnen oder angewiesen.

Fig. 7 zeigt ein schematisches Blockdiagramm zum Erläutern eines Computerprogrammprodukts 200 gemäß einer Ausführungsform der vorliegenden Erfindung. Das Computerprogrammprodukt 200 umfasst ausführbaren Programmcode 250, welcher dazu ausgelegt ist, wenn er ausgeführt wird, das Verfahren gemäß einer Ausführungsform der vorliegenden Erfindung durchzuführen, insbesondere das anhand von Fig. 3 und/oder Fig. 4 beschriebene Verfahren.

Fig. 8 zeigt ein schematisches Blockdiagramm zum Erläutern eines nichtflüchtigen computerlesbaren Datenspeichermediums 300 gemäß einer Ausführungsform der vorliegenden Erfindung. Das Datenspeichermedium 300 enthält ausführbaren Programmcode 350, welcher dazu ausgelegt ist, wenn er ausgeführt wird, das Verfahren gemäß einer Ausführungsform der vorliegenden Erfindung durchzuführen, insbesondere das anhand von Fig. 3 und/oder Fig. 4 beschriebene Verfahren.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. Es versteht sich weiterhin, dass als separate beschriebene Einheiten teilweise ineinander integriert sein können.

### Bezugszeichenliste

- 1: Drahtelektrode
- 2: Drahtelektrodenende
- 3: Drahtseele
- 4: Schlauch
- 5: Schlauchpaket
- 100: Schweißvorrichtung
- 110: Fördereinrichtung
- 120: elektrische-Parameter-Messeinrichtung
- 130: Steuereinrichtung
- 131: Datenspeicher
- 140: Schweißbrenner
- 141: Kontaktrohr
- 142: Kontaktrohrende
- 150: Messeinrichtung
- 152: Drehzahlgeber
- 154: Zeitgeber
- 161: elektrischer Anschluss
- 162: elektrischer Anschluss
- 163: elektrische Leitung
- 170: Werkstück
- 190: Schweißstromquelle

- D0, D1: Drahtspiel-Werte
- I: Schweißstrom
- I1, I2, I3: Stromwerte
- L: Kontaktrohrlänge
- s: Drahtvorschublänge
- s0, s1: Drahtvorschublängenwerte
- S10..S90: Verfahrensschritte
- t1,..t8: Zeitpunkte
- x: Stickout-Länge

## Patentansprüche

1. Schweißvorrichtung (100), mit:
einer Fördereinrichtung (110) mit einem Vorwärtsbetrieb (V) zum Fördern einer abschmelzenden Drahtelektrode (1) der Schweißvorrichtung (100) in Vorwärtsrichtung und mit einem Rückwärtsbetrieb (R) zum Fördern der Drahtelektrode (1) in Rückwärtsrichtung;
einem Schweißbrenner (140) mit einem Kontaktrohr (141), welches elektrisch mit einem definierten elektrischen Potenzial verbunden oder verbindbar ist und mittels welchem ein elektrischer Kontakt zu der Drahtelektrode (1) herstellbar ist;
eine elektrische-Parameter-Messeinrichtung (120), welche zum Messen eines elektrischen Parameters zwischen der Drahtelektrode (1) und einem Werkstück eingerichtet ist;
einer Steuereinrichtung (130), welche zum Durchführen eines Drahtspiel-Messverfahrens dazu eingerichtet ist:
- die Fördereinrichtung (110) zu steuern, die Drahtelektrode (1) in dem Vorwärtsbetrieb (V) zu fördern (S20), bis mittels der elektrische-Parameter-Messeinrichtung (120) ein Kurzschluss zwischen der Drahtelektrode (1) und dem Werkstück festgestellt wird;
- daraufhin die Fördereinrichtung (110) zu steuern, die Drahtelektrode (1) in dem Rückwärtsbetrieb (R) zu fördern (S30);
- daraufhin eine Messung der Drahtvorschublänge (s) zu starten (S40), und diese zu beenden (S50), sobald durch die elektrische-Parameter-Messeinrichtung (120) ein Aufbruch des Kurzschlusses festgestellt wird; und
- basierend auf der gemessenen Drahtvorschublänge (s) einen Drahtspiel-Wert (D1) auszugeben (S60).

2. Schweißvorrichtung (100) nach Anspruch 1,
wobei die Messung der Drahtvorschublänge (s) dann gestartet wird (S40), wenn die Drahtfördergeschwindigkeit einen Nulldurchgang vom Positiven ins Negative durchführt.

3. Schweißvorrichtung (100) nach Anspruch 1 oder 2,
wobei die Steuereinrichtung (130) außerdem dazu eingerichtet ist, einen Schweißprozess unter Verwendung des ausgegebenen Drahtspiel-Werts (D1) durchzuführen.

4. Schweißvorrichtung (100) nacheinem der Ansprüche 1 bis 3, wobei die Steuereinrichtung (130) dazu eingerichtet ist, einen Zeitpunkt (t7), an welchem ein Schweißstrom (I) erhöht wird, unter Verwendung des ausgegebenen Drahtspiel-Werts (D1) zu berechnen und einen entsprechenden Steuerbefehl auszugeben.

5. Schweißvorrichtung (100) nach einem der Ansprüche 1 bis 4, wobei die Steuereinrichtung (130) dazu eingerichtet ist, einen Zeitpunkt (t7), an welchem der Schweißstrom (I) während eines Förderns der Drahtelektrode (1) im Rückwärtsbetrieb (R) der Fördereinrichtung (110) nach einem Kurzschluss erhöht wird, unter Verwendung des ausgegebenen Drahtspiel-Werts (D1) zu berechnen und einen entsprechenden Steuerbefehl auszugeben.

6. Schweißvorrichtung (100) nach einem der Ansprüche 1 bis 5, wobei die Steuereinrichtung (130) dazu eingerichtet ist, das Drahtspiel-Messverfahren regelbasiert automatisch durchzuführen, insbesondere nach jeder Schweißnaht.

7. Schweißvorrichtung (100) nach einem der Patentansprüche 1 bis 6, wobei die Steuereinrichtung (130) außerdem dazu eingerichtet ist, eine Information über eine vordefinierte Länge, über welche das Drahtelektrodenende (2) über ein Ende des Kontaktrohrs (141) hinausstehen soll, zu empfangen, und die Fördereinrichtung (110) zu steuern, die Drahtelektrode (1) basierend auf dem ausgegebenen Drahtspiel-Wert derart zu fördern, dass das Drahtelektrodenende (2) über die vordefinierte Länge über das Ende des Kontaktrohrs (141) hinaussteht.

8. Schweißvorrichtung (100) nach einem der Patentansprüche 1 bis 7, wobei die Messung der Drahtvorschublänge (s) unter Verwendung eines Zeitgebers (154) und/oder eines Drehzahlgebers (152) erfolgt.

9. Schweißvorrichtung (100) nach einem der Patentansprüche 1 bis 8, wobei die Schweißvorrichtung (100) mit einer Mehrzahl von Komponenten (5, 110, 140) verbindbar ist, und einen Datenspeicher (131) aufweist, welcher zum Speichern jedes für eine Komponente (5, 110, 140) oder Kombination von Komponenten (5, 110, 140) ermittelten Drahtspiel-Wertes (D1) und zum Bereitstellen der gespeicherten Drahtspiel-Werte (D1) für Schweißprozesse unter Verwendung einer der Mehrzahl von Komponenten (5, 110, 140) eingerichtet ist.

10. Schweißvorrichtung (100) nach Anspruch 9, wobei die Mehrzahl von Komponenten mindestens einen weiteren Schweißbrenner (140), mindestens eine weitere Fördereinrichtung (110) und/oder mindestens ein Schlauchpaket (5) umfasst.

11. Verfahren zum Bestimmen eines Drahtspiel-Werts (D0, D1) einer Schweißvorrichtung (100), welche einen Schweißbrenner (140) und eine Fördereinrichtung (110) mit einem Vorwärtsbetrieb (V) zum Fördern einer Drahtelektrode (1) der Schweißvorrichtung (100) in Vorwärtsrichtung und mit einem Rückwärtsbetrieb (R) zum Fördern der Drahtelektrode (1) in Rückwärtsrichtung aufweist, umfassend zumindest die folgenden automatisierten Schritte:
- Fördern (S20) der Drahtelektrode (1) in dem Vorwärtsbetrieb (V), bis ein Kurzschluss zwischen der Drahtelektrode (1) und einem Werkstück festgestellt wird;
- daraufhin Fördern (S30) der Drahtelektrode (1) in dem Rückwärtsbetrieb (R);
- daraufhin Starten (S40) einer Messung der Drahtvorschublänge (s);
- Beenden (S50) der Messung der Drahtvorschublänge (s), sobald ein Aufbruch des Kurzschlusses festgestellt wird; und
- Ausgeben (S60) eines Drahtspiel-Werts (D1) basierend auf der gemessenen Drahtvorschublänge (s).

12. Verfahren zum Betreiben einer Schweißvorrichtung (100), umfassend zumindest die Schritte:
Bereitstellen (S70) des ausgegebenen Drahtspiel-Werts (D1) gemäß dem Verfahren nach Patentanspruch 11; und
Einstellen (S80) einer Position eines Drahtelektrodenendes (2) einer Drahtelektrode (1) der Schweißvorrichtung (100) unter Verwendung des bereitgestellten Drahtspiel-Werts (D1) und/oder Einstellen (S90) eines Zeitpunkts (t7), an welchem ein Steuersignal ausgegeben wird, unter Verwendung des bereitgestellten Drahtspiel-Werts (D1).

13. Verfahren nach Anspruch 12, wobei der einzustellende Zeitpunkt (t7), an welchem das Steuersignal ausgegeben wird, ein Zeitpunkt ist, an welchem ein Schweißstrom (I) der Schweißvorrichtung (100) und/oder eine Schweißspannung (U) der Schweißvorrichtung (100) erhöht oder verringert wird.

14. Computerprogrammprodukt (200), umfassend ausführbaren Programmcode (250), welcher dazu ausgelegt ist, wenn er ausgeführt wird, das Verfahren gemäß einem der Patentansprüche 11 bis 13 durchzuführen.

15. Nicht-flüchtiges, computerlesbares
Datenspeichermedium (300) mit ausführbarem Programmcode (350), welcher dazu ausgelegt ist, wenn er ausgeführt wird, das Verfahren gemäß einem der Patentansprüche 11 bis 13 durchzuführen.
